# DEMANDE DE BREVET EUROPEEN

(11) **EP 0 816 142 A1**
(43) Date de publication de la demande: **07.01.1998**
(21) Numéro de dépôt: 97401479.7
(22) Date de dépôt: 25.06.1997
(51) Int. Cl.: B60G 17/056, B60G 17/033, B60G 21/06, F15B 13/00

(54) **Système de commande d'une suspension hydropneumatique de véhicule automobile**

(30) Priorité: 04.07.1996 FR 9608351
(71) Demandeur: AUTOMOBILES PEUGEOT, 75116 Paris (FR); AUTOMOBILES CITROEN, 92200 Neuilly-sur-Seine (FR)
(72) Inventeur: Lamorlette, Bruno, 78800 Houilles (FR)
(74) Mandataire: Berger, Helmut

(57) **Abrégé**

L'invention concerne un système de commande d'une suspension hydropneumatique de véhicule automobile.

Ce système est du type comprenant un dispositif d'alimentation de la suspension en fluide hydraulique, pourvu d'une source de fluide sous pression et d'une pluralité de conduits hydrauliques (a à k), et des éléments d'établissement de voies d'écoulement de fluide (1 à 6) entre la suspension et le dispositif hydraulique à travers lesdits conduits. Le système est caractérisé en ce que l'ensemble des éléments d'établissement (1 à 6) desdites voies d'écoulement sont montés sur un seul bloc de support (15) monté sur le véhicule, que les conduits hydrauliques (a à k) sont prévus dans ce bloc 15 et en ce qu'un calculateur (27) est prévu pour piloter les éléments d'établissement des voies d'écoulement.

L'invention est utilisable pour des suspensions hydropneumatiques de véhicule automobile.

## Description

L'invention concerne un système de commande d'une suspension hydrcpneumatique de véhicule automobile, du type comprenant un dispositif d'alimentation de la suspension en fluide hydraulique, pourvu d'une source de fluide sous pression et d'une pluralité de conduits hydrauliques, et des éléments d'établissement de voies d'écoulement de fluide entre la suspension et le dispositif hydraulique à travers lesdits conduits.

Les systèmes sus-mentionnés, qui sont connus, sont du type hydromécanique. Dans ces systèmes, la commande de l'envoi du fluide hydraulique dans les éléments de la suspension et du retrait du fluide est effectuée par des organes mécaniques.

Ces systèmes présentent les inconvénients majeurs d'être encombrants et sujets à de fréquents défauts de fonctionnement.

La présente invention a pour but de proposer un système du type énoncé plus haut, qui ne présente pas les inconvénients des systèmes hydromécaniques connus.

Pour atteindre ce but, un système selon l'invention est caractérisé en ce que l'ensemble des éléments d'établissement desdites voies d'écoulement sont montés sur un seul bloc de support monté sur le véhicule, que les conduits hydrauliques sont prévus dans ce bloc et en ce qu'un calculateur est prévu pour piloter les éléments d'établissement des voies d'écoulement.

Selon une caractéristique avantageuse de l'invention, le calculateur est également monté sur le bloc de support précité.

Selon une autre caractéristique avantageuse de l'invention, les éléments montés sur le bloc assurent au moins une des fonctions d'alimentation en pression, anti-affaissement, suspension et/ou correction de hauteur.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

La figure 1 est un schéma fonctionnel du système de commande d'une suspension hydropneumatique de véhicule automobile, selon la présente invention.

La figure 2 est une vue en perspective d'un bloc de support des éléments d'établissement des voies d'écoulement, selon la présente invention, à l'état assemblé.

Les figures 3 et 4 sont des vues en perspective du bloc selon la figure 2, mais montrent celui-ci à des étapes d'assemblage différentes.

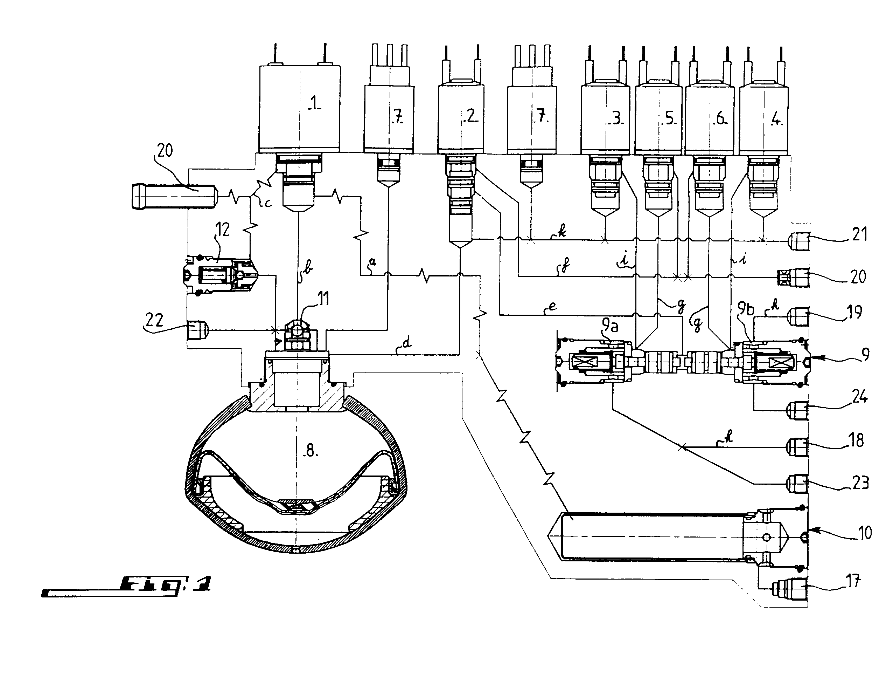

Sur la figure 1, qui est un schéma fonctionnel du système de commande d'une suspension hydropneumatique de véhicule automobile selon la présente invention, les symboles de référence 1 à 6 désignent des électrovannes, le numéro 7 deux capteurs de pression et le numéro de référence 8 un dispositif accomplissant la fonction de la source de fluide sous pression du système, formée par un accumulateur se présentant sous la forme d'une sphère hydropneumatique. Les références 9a, 9b à 12 désignent respectivement une paire de clapets anti-affaissement avant et arrière, un filtre haute pression, un clapet anti-retour à bille et une vis de purge pourvue d'un clapet de surpression, tous les deux associés au dispositif source de pression 8.

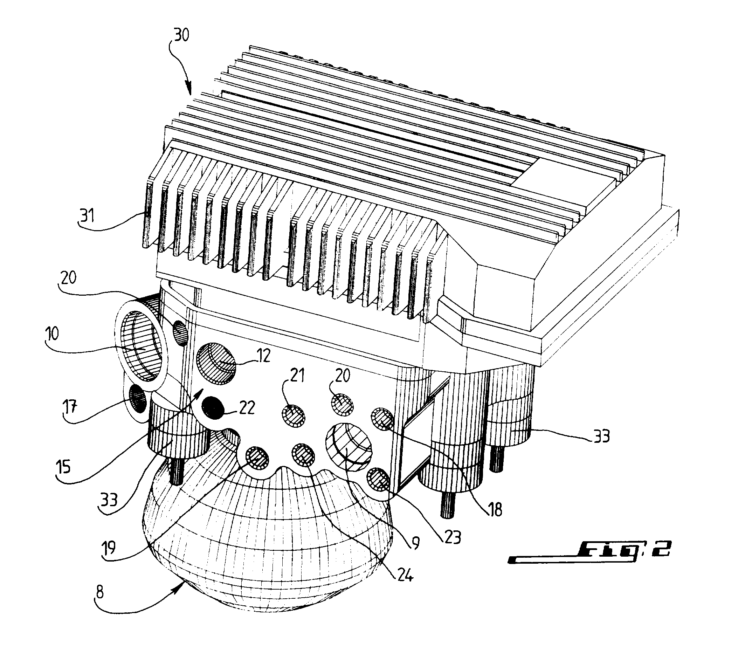

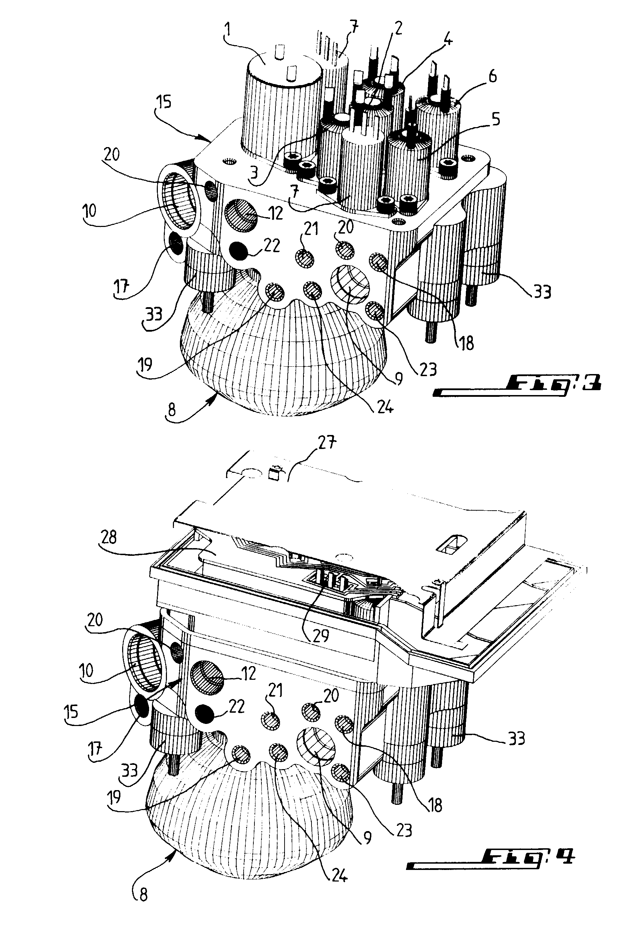

Tous les éléments qui viennent d'être énoncés sont montés. sur un seul et même bloc de support 15, comme le montre la figure 3. Le bloc comporte un certain nombre de canaux internes a à k. Les électrovannes permettent d'établir à travers ces canaux des voies d'écoulement du fluide hydraulique aux éléments de la suspension du véhicule automobile, dont seulement les orifices de raccord au bloc 15 sont indiqués. Ces raccords portent les références 17 à 21. Les références 23 et 24 indiquent des organes supplémentaires également montés sur le bloc support 15.

Plus précisément, les numéros de référence 1 et 2 désignent respectivement une électrovanne grand débit et une électrovanne 3 voies. Les numéros de référence 3 à 6 désignent quatre électrovannes 2 voies d'admission et d'échappement, associées respectivement à l'essieu avant et à l'essieu arrière.

Concernant les raccords 17 à 22, le raccord 17 constitue l'entrée du fluide sous pression envoyé par la pompe du dispositif hydraulique, les raccords 18 et 19 les raccords vers les suspensions avant et arrière, 20 deux raccords de retour au réservoir de fluide hydraulique, et 21 et 22 deux raccords d'alimentation en fluide haute pression allant vers d'autres circuits. Enfin, les références 23 et 24 indiquent des vis de purge pour les suspensions respectivement avant et arrière.

Les électrovannes 1 à 6 sont pilotées par un calculateur qui est également monté sur le bloc 15. La référence 27 désigne la carte calculateur (figure 4) . Une carte à circuits imprimés 28 établit la liaison entre les électrovannes et le calculateur, comme on le voit sur la figure 4. En 29 sont représentés trois picots de soudure d'un capteur 7. Comme le montre la figure 2, le calculateur 27 est coiffé d'un capot 30 fixé sur le bloc de support 15 et pourvu d'ailettes de refroidissement 31. Enfin en 33 sont indiqués des plots antivibration.

Il ressort notamment de la figure 3 que les électrovannes et capteurs sont montés sur la face supérieure du bloc 15, en dessous de la carte à circuits imprimés, tandis que les orifices de raccord sont pratiqués dans la face latérale.

On décrira ci-après le fonctionnement du système selon l'invention, qui vient d'être décrit, en explicitant les trois fonctions principales que le système est en mesure d'accomplir, à savoir les fonctions "source de pression", "anti-affaissement" et "correction de hauteur".

Pour la fonction "source de pression", la pompe débite du liquide sous pression dans le bloc à travers le raccord 17 et le filtre 10. Le liquide arrive à l'électrovanne grand débit 1 par le canal interne a. La commande d'ouverture et de fermeture de cette électrovanne est réalisée par le calculateur, par l'intermédiaire des capteurs de pression 7 qui détectent la pression à l'intérieur de l'accumulateur 8. Tant que la pression captée est inférieure à un seuil prédéterminé de par exemple 140 bars, le fluide hydraulique passe par le canal b et le clapet anti-retour à bille 11, dans l'accumulateur 8. Lorsqu'un deuxième seuil de pression est atteint, de par exemple 200 bars, les capteurs envoient l'information au calculateur et celui-ci ouvre l'électrovanne 1. Le débit de la pompe passe alors à travers l'électrovanne 1 pour retourner au réservoir via le canal c et le raccord de retour 20. Le clapet de surpression 12 sert à la fois de vis de purge pour vider l'accumulateur en cas d'intervention et de clapet de surpression pour permettre l'évacuation du liquide contenu à l'intérieur de l'accumulateur 8 en cas de surpression accidentelle dans celui-ci. Les capteurs de pression sont au nombre de deux pour raison de sécurité.

La fonction anti-affaissement, réalisée à l'aide des clapets anti-affaissement 9 qui sont connus en soi, permet d'éviter que le véhicule à suspension hydropneumatique ne s'affaisse au bout d'un certain temps d'immobilisation. Les clapets anti-affaissement isolent les suspensions du reste du circuit hydraulique pour éviter le retour du liquide au réservoir, dû à des fuites possibles au niveau de certains organes, ce qui entraînerait l'affaissement du véhicule. Les clapets sont pilotés par l'électrovanne 2. Les clapets sont normalement en position anti-affaissement. Pour faire une correction en hauteur, on amène les clapets dans une position autorisant le passage du liquide. A cette fin, l'électrovanne 2 est excitée par le calculateur et la pression passe dans l'électrovanne par le canal d, puis par le canal e pour pousser les clapets dans leur position dans laquelle ils mettent les suspensions en communication avec la source de fluide hydraulique. Lorsque la correction est terminée, l'électrovanne 2 est remise au repos et la pression dans le canal e descend du fait que l'électrovanne met le canal e en communication avec le canal f de retour au réservoir, un ressort repoussant les clapets dans leurs positions d'isolation des suspensions.

La fonction "correction de hauteur" est réalisée par les quatres électrovannes 2 voies 3 à 6. Ces électrovannes sont commandées par le calculateur. Celui-ci reçoit des informations de deux capteurs de hauteur (qui ne sont pas représentés). Un capteur est associé à l'essieu avant, l'autre à l'essieu arrière. Lorsque le véhicule est trop haut, le calculateur commande l'ouverture de l'électrovanne d'échappement 5 ou 6 ou des deux afin de. permettre à une certaine quantité de fluide se trouvant dans la suspension de s'échapper, ce qui fait descendre le véhicule. A cette fin, le canal de retour au réservoir f est mis en communication par les électrovannes avec le canal g correspondant. Quand le calculateur reçoit l'information par le capteur de hauteur que la hauteur désirée est atteinte, il commande la fermeture de l'électrovanne.

Lorsque le véhicule est trop bas, le calculateur commande l'ouverture de l'électrovanne d'admission avant 3 ou de l'électrovanne d'admission arrière 4 ou des deux, qui mettent alors les canaux h des raccords 18 et 19 allant vers les suspensions avant et arrière en communication, à travers le ou les clapets anti-affaissement 9a, 9b et les canaux internes i, avec le canal k qui est en communication avec le canal d en provenance de l'accumulateur 8. Les électrovannes sont fermées lorsque le niveau souhaité est atteint.

Le système de commande de suspension hydropneumatique selon l'invention présente de nombreux avantages par rapport aux systèmes hydromécaniques connus. L'invention permet un regroupement des organes du système de commande dans un même bloc, de supprimer toutes les tringleries de commande de hauteur, de multiples tubes et raccords hydrauliques, et réduit ainsi le risque de fuites. L'invention permet de faciliter le montage en supprimant de multiples supports. Grâce au système électrohydraulique selon l'invention, les commandes sont plus précises et de plus amples options peuvent être envisagées, telles que par exemple la variation d'assiette en fonction de la vitesse et certains défauts de fonctionnement inhérents aux systèmes hydromécaniques sont éliminés.

## Revendications

1. Système de commande d'une suspension hydropneumatique de véhicule automobile, du type comprenant un dispositif d'alimentation de la suspension en fluide hydraulique,. pourvu d'une source de fluide sous pression et d'une pluralité de conduits hydrauliques, et des éléments d'établissement de voies d'écoulement de fluide entre la suspension et le dispositif hydraulique à travers lesdits conduits, caractérisé en ce que l'ensemble des éléments d'établissement (1 à 6) desdites voies d'écoulement sont montés sur un seul bloc de support (15) monté sur le véhicule, que les conduits hydrauliques (a à k) sont prévus dans ce bloc 15 et en ce qu'un calculateur (27) est prévu pour piloter les éléments d'établissement des voies d'écoulement.

2. Système selon la revendication 1, caractérisé en ce que le calculateur est monté sur le bloc de support (15) précité.

3. Système selon la revendication 1 ou 2, caractérisé en ce que les conduits hydraulique (a à k) sont réalisés dans le bloc de support (15) sous forme de canaux internes.

4. Système selon l'une des revendications précédentes, caractérisé en ce qu'il est adapté pour assurer l'une au moins des fonctions d'alimentation en pression, anti-affaissement, suspension et/ou correction de hauteur, tous les moyens utilisés pour l'accomplissement de ces fonctions étant montés sur le bloc de support (15).

5. Système selon la revendication 4, caractérisé en ce que les moyens d'accomplissement de la fonction d'alimentation en pression comprennent une source de fluide sous pression (8), une électrovanne (1) pilotée par le calculateur, des moyens capteurs (7) de la pression du fluide à l'intérieur de la source (8), des canaux (a, b, c) de mise en communication de la pompe, alternativement, avec ladite source et un réservoir de. retour de fluide, à travers ladite électrovanne (1), la pompe étant reliée à la source (8) tant que la pression dans celle-ci est inférieure à une valeur prédéterminée.

6. Système selon la revendication 5, caractérisé en ce que la source de fluide sous pression (8) comprend un accumulateur se présentant sous la forme d'une sphère hydropneumatique.

7. Système selon la revendication 6, caractérisé en ce que l'accumulateur (8) est pourvu d'un moyen de purge et d'un clapet de surpression (12).

8. Système selon l'une des revendications précédentes, caractérisé en ce qu'il comprend, pour accomplir la fonction anti-affaissement, des clapets anti-affaissement (9a, 9b) de mise en communication de la suspension avec la source de fluide sous pression ou d'isolement de la suspension, et une électrovanne (2) de pilotage des clapets anti-affaissement sous la commande du calculateur.

9. Système selon l'une des revendications précédentes, caractérisé en ce qu'il comprend, pour accomplir la fonction correction de hauteur, des clapets antiaffaissements (9a, 9b) avant et arrière permettant de mettre en communication la suspension avec la source de fluide sous pression ou d'isoler la suspension, et des électrovannes (3, 5) pour l'essieu avant et (4, 6) pour l'essieu arrière permettant d'envoyer du fluide dans les suspensions ou d'en retirer à travers les clapets anti-affaissement (9a, 9b).

10. Système selon l'une des revendications précédentes, caractérisé en ce que le bloc comporte un filtre haute pression (10) dans le raccord du bloc à la pompe du. dispositif d'alimentation en fluide hydraulique.

11. Système selon l'une des revendications précédentes, caractérisé en ce que le bloc de support (15) comporte des raccords à d'autres circuits (21, 22) d'alimentation en fluide.

12. Système selon l'une des revendications précédentes, caractérisé en ce que le bloc de support (15) est pourvu de plots anti-vibration (33).
